# EUROPÄISCHE PATENTSCHRIFT

(11) **EP 3 605 031 B1**
(45) Veröffentlichungstag und Bekanntmachung des Hinweises auf die Patenterteilung: **07.04.2021**
(21) Anmeldenummer: 18187120.3
(22) Anmeldetag: 02.08.2018
(51) Int. Cl.: G01F 23/284, H01Q 1/00, H01Q 1/22, G01S 7/00, G01S 7/02, G01S 13/88

(54) **RADARSENSOR ZUR FÜLLSTAND- ODER GRENZSTANDMESSUNG**
RADAR SENSOR FOR FILL LEVEL OR LIMIT LEVEL DETERMINATION
CAPTEUR RADAR DESTINÉ À LA MESURE DE NIVEAU DE REMPLISSAGE OU DE NIVEAU LIMITE

(43) Veröffentlichungstag der Anmeldung: 05.02.2020
(73) Patentinhaber: VEGA Grieshaber KG, 77709 Wolfach (DE)
(72) Erfinder: DIETERLE, Levin, 77709 Oberwolfach (DE); WELLE, Roland, 77756 Hausach (DE)
(74) Vertreter: Maiwald Patent- und Rechtsanwaltsgesellschaft mbH

(56) Entgegenhaltungen:
- EP-A1- 1 493 003
- EP-A1- 3 032 640
- DE-A1-102006 032 250
- US-A1- 2010 101 317
- US-A1- 2015 253 176
- US-A1- 2016 313 156

## Beschreibung

### Gebiet der Erfindung

Die Erfindung betrifft einen Radarsensor zur Messung, insbesondere einer laufzeitbasierten Messung, eines Füllstandes und/oder Grenzstandes eines Füllgutes in einem Behälter sowie ein Verfahren zur Herstellung eines solchen Radarsensors.

### Technologischer Hintergrund

Füllstandmessgeräte werden allgemein dazu verwendet, um den Füllstand eines Füllgutes in einem Behälter zu messen. Bei dem Füllgut kann es sich um eine Flüssigkeit und/oder ein Schüttgut handeln. Radarbasierte Füllstandmessgeräte senden Radarsignale auf die Füllgutoberfläche. Die Laufzeit des Radarsignals von dem Radarsensor zur Füllgutoberfläche und zurück ist proportional zur Länge des zurückgelegten Wegs, so dass sich aus der gemessenen Laufzeit, etwa unter Kenntnis der Position des Radarsensors und der Behältergeometrie, der Füllstand bestimmen lässt.

In vielen Anwendungen müssen besondere Maßnahmen zum sicheren und zuverlässigen Betrieb von Radarsensoren für die Füllstandmessung getroffen werden. Beispielsweise können in Anlagen der chemischen Industrie explosive Gase auftreten, die bevorzugt nicht in Kontakt mit der Elektronik des Radarsensors kommen dürfen. Außerdem kann es erforderlich sein, eine Korrosion der Elektronik des Radarsensors durch aggressive Flüssigkeiten oder Gase zu vermeiden. Auch Staub kann die Funktion der Elektronik des Radarsensors negativ beeinträchtigen.

Um den sicheren Betrieb von Radarsensoren zu gewährleisten, wird die Elektronik des Radarsensors in der Regel durch ein Gehäuse geschützt. Dabei weist das Gehäuse Öffnungen für Kabeldurchführungen auf, insbesondere für die Energieversorgung und/oder leitungsgebundene Kommunikationsverbindungen. Die Öffnungen des Gehäuses müssen aufwendig abgedichtet werden, um ein Eindringen von Staub, Flüssigkeiten oder Gasen in das Gehäuse des Radarsensors zu vermeiden. Daher sind bei Radarsensoren für die Füllstandmessung zur Erlangung einer hohen International Protection (IP) Schutzart bisher aufwendige Herstellungsverfahren erforderlich, die mitunter mit hohen Herstellungskosten verbunden sind.

Das Dokument EP 3 032 640 A1 beschreibt ein Füllstandmessgerät mit einem Kunststoffgehäuse und ein Verfahren zum Herstellen eines solchen Füllstandmessgeräts.

### Zusammenfassung der Erfindung

Mit Ausführungsformen der Erfindung kann in vorteilhafter Weise ein einfach herstellbarer, kompakter und robuster Radarsensor für die Füllstandmessung und/oder die Grenzstandmessung bereitgestellt werden.

Dies wird insbesondere durch die Gegenstände der unabhängigen Patentansprüche ermöglicht. Weiterbildungen der Erfindung ergeben sich aus den Unteransprüchen und der folgenden Beschreibung.

Ein erster Aspekt der Erfindung betrifft einen Radarsensor zur Messung eines Füllstandes und/oder Grenzstandes eines Füllgutes in einem Behälter. Dabei weist der Radarsensor eine Sensoreinheit, eine elektronische Auswerteeinheit, eine Kommunikationseinheit, eine Energieversorgungseinheit und ein Gehäuse auf. Die Sensoreinheit ist dazu ausgeführt, ein Radarsignal durch das Gehäuse hindurch, insbesondere durch eine Gehäusewandung und/oder eine Gehäusewand des Gehäuses hindurch, abzustrahlen und/oder zu empfangen, wobei das Gehäuse derart ausgebildet ist, dass das Radarsignal durch das Gehäuse, insbesondere durch die Gehäusewandung, zumindest teilweise transmittierbar ist. Mit anderen Worten kann das Gehäuse derart ausgebildet sein, dass das Radarsignal zumindest teilweise durch das Gehäuse abgestrahlt und/oder empfangen werden kann. Die elektronische Auswerteeinheit ist dazu eingerichtet, basierend auf einer Laufzeit und/oder Laufzeitmessung des Radarsignals zwischen Abstrahlen und Empfangen des Radarsignals wenigstens einen mit dem Füllstand und/oder dem Grenzstand korrelierenden Parameter zu ermitteln, wobei die Kommunikationseinheit dazu eingerichtet ist, den wenigstens einen Parameter drahtlos durch das Gehäuse hindurch an einen Empfänger zu übermitteln und/oder zu übertragen. Die Kommunikationseinheit kann dabei insbesondere dazu eingerichtet sein, ein mit dem wenigstens einen Parameter korrelierendes Messsignal und/oder ein für den wenigstens einen Parameter repräsentatives und/oder indikatives Messsignal durch das Gehäuse hindurch zu übermitteln. Auch kann die Kommunikationseinheit dazu eingerichtet sein, etwa ein Steuersignal durch das Gehäuse hindurch zu empfangen. Das Gehäuse kann daher derart ausgestaltet sein, dass das Messsignal und/oder das Steuersignal zumindest teilweise durch das Gehäuse, die Gehäusewandung und/oder die Gehäusewand transmittiert werden kann. Das Gehäuse umschließt dabei die Sensoreinheit, die elektronische Auswerteeinheit, die Energieversorgungseinheit und die Kommunikationseinheit vollständig Das Gehäuse ist vollständig geschlossen einstückig aus Kunststoff gespritzt.

Damit kann in vorteilhafter Weise ein kompakter, robuster, zuverlässig arbeitender und kosteneffizient herstellbarer Radarsensor bereitgestellt werden. Insbesondere kann durch das Gehäuse sämtliche Elektronik des Radarsensors zuverlässig und dauerhaft vor äußeren Einflüssen, wie etwa Staub, Feuchtigkeit, Gas, Flüssigkeit oder dergleichen, geschützt werden. Der Radarsensor kann etwa eine hohe IP-Schutzart erreichen, beispielsweise IP 68 und/oder IP 69.

Die Sensoreinheit des Radarsensors ist dazu ausgeführt, ein Radarsignal durch das Gehäuse hindurch, insbesondere durch eine Gehäusewandung des Gehäuses hindurch, abzustrahlen und/oder zu empfangen. Das Radarsignal kann allgemein ein Sendesignal, welches von dem Radarsensor und/oder der Sensoreinheit in Richtung des Füllguts abgestrahlt werden kann und ein Empfangssignal, welches an dem Füllgut reflektiert und von der Sensoreinheit empfangen werden kann, bezeichnen. Gleichsam kann die Sensoreinheit zum Abstrahlen des Sendesignals in Richtung des Füllguts und zum Empfangen des an dem Füllgut reflektierten Empfangssignals eingerichtet sein. Dazu kann die Sensoreinheit eine Antenne aufweisen. Beispielsweise kann eine Parabolantenne, eine Hornantenne, eine Cassegrain-Antenne oder eine Patchantenne verwendet werden. Die Sensoreinheit kann auch eine Antennengruppe aufweisen, und/oder die Richtcharakteristik der Antennengruppe kann adaptiv anpassbar sein, um beispielsweise eine Strahlbündelung zu erzielen.

Die Antenne der Sensoreinheit kann sowohl dazu ausgeführt sein, das Radarsignal und/oder das Sendesignal abzustrahlen als auch das von der Füllgutoberfläche reflektierte Radarsignal und/oder das Empfangssignal zu empfangen. Dazu kann die Sensoreinheit beispielsweise eine Sende-Empfangsweiche (Duplexer) aufweisen, die das Umschalten zwischen den zeitlich versetzten Sende- und Empfangsvorgängen ausführt. Die Sende-Empfangsweiche kann etwa zur zeitlichen Diskriminierung des Sendesignals und des Empfangssignals ausgeführt und/oder eingerichtet sein. Es ist aber auch möglich, dass die Sensoreinheit unterschiedliche Antennen für das Senden und Empfangen des Radarsignals verwendet.

Der Radarsensor kann dazu eingerichtet sein, den Füllstand und/oder Grenzstand des Füllgutes in dem Behälter zu festgelegten Zeiten, beispielsweise periodisch, zu messen. Dementsprechend kann die Sensoreinheit dazu eingerichtet sein, das Radarsignal zu festgelegten Zeiten, insbesondere periodisch, abzustrahlen. Das Abstrahlen und Empfangen des Radarsignals kann also periodisch wiederholt werden. Alternativ oder in Ergänzung dazu kann der Radarsensor dazu eingerichtet sein, eine Messung des Füllstandes und/oder Grenzstandes in Reaktion auf eine diesbezügliche Anfrage eines anderen Geräts, etwa einer Leitstelle oder eines Benutzergeräts, auszuführen. Beispielsweise kann über die Kommunikationseinheit ein Steuersignal empfangen werden, und/oder der Radarsensor kann als Antwort auf das Steuersignal eine Füllstandmessung und/oder Grenzstandmessung durchführen.

Die elektronische Auswerteeinheit ist dazu eingerichtet, basierend der Laufzeit und/oder der Laufzeitmessung zwischen Abstrahlen und Empfangen des Radarsignals wenigstens einen mit dem Füllstand und/oder dem Grenzstand korrelierenden Parameter zu bestimmen und/oder zu ermitteln. Dazu kann die elektronische Auswerteeinheit Signale und/oder Daten verwenden, die ihr von der Sensoreinheit bereitgestellt werden. Die elektronische Auswerteeinheit kann auch dazu eingerichtet sein, ein Signal von der Sensoreinheit und/oder der Kommunikationseinheit zu empfangen, mit dem die elektronische Auswerteeinheit getriggert und/oder veranlasst wird, den wenigstens einen Parameter zu bestimmen.

Der von der elektronischen Auswerteeinheit bestimmte Parameter kann beispielsweise repräsentativ und/oder indikativ für die Laufzeit zwischen dem Abstrahlen des Radarsignals und dem Empfangen des von der Füllgutoberfläche reflektierten Radarsignals, für den Füllstand des Füllgutes in dem Behälter, für den Grenzstand des Füllguts, für ein Erreichen des Grenzstandes und/oder für das Überschreiten eines Füllstandes oder Grenzstandes sein.

Bei Kenntnis der Ausbreitungsgeschwindigkeit des Radarsignals in dem Medium zwischen Radarsensor und Füllgutoberfläche kann aus der Laufzeit des Radarsignals die Distanz zwischen Radarsensor und Füllgutoberfläche berechnet und/oder ermittelt werden. In vielen Anwendungen kann diese Ausbreitungsgeschwindigkeit hinreichend genau mit der Lichtgeschwindigkeit approximiert werden. Die Füllguthöhe kann beispielsweise bestimmt werden, etwa wenn die Höhe des Radarsensors über dem Behälterboden vorab bekannt ist. Da das Radarsignal mitunter nur teilweise von der Füllgutoberfläche reflektiert wird, während ein anderer Teil des Radarsignals durch das Füllgut propagiert, kann der Füllstand auch gemessen werden, indem die Zeitspanne zwischen dem Empfangen des von der Füllgutoberfläche reflektierten Teils des Radarsignals und dem Empfangen des von dem Behälterboden reflektierten Teils des Radarsignals bestimmt wird.

Zur Bestimmung der Laufzeiten kann die elektronische Auswerteeinheit sowohl analoge als auch digitale Signalverarbeitungsverfahren verwenden. Dementsprechend kann die elektronische Auswerteeinheit beispielsweise wenigstens einen Verstärker, Tiefpassfilter, Frequenzmischer und/oder Bandpassfilter für die analoge Signalverarbeitung aufweisen. Ferner kann die elektronische Auswerteeinheit einen oder mehrere Analog-Digital-Wandler aufweisen, die analoge Signale abtasten und quantisieren. Darüber hinaus kann die elektronische Auswerteeinheit einen oder mehrere Prozessoren für die digitale Signalverarbeitung aufweisen, zum Beispiel Mikroprozessoren, digitale Signalprozessorenund/ oder andere Prozessoren mit anwendungsspezifischen Befehlssätzen (application specific instruction set processors - ASIPs). Zudem kann die elektronische Auswerteeinheit einen oder mehrere dedizierte Speicherbausteine für Daten und/oder Programmcode aufweisen, insbesondere flüchtige oder nichtflüchtige Speicher. Weiterhin kann die elektronische Auswerteeinheit einen oder mehrere anwendungsspezifische integrierte Schaltkreise (ASICs) aufweisen.

Die Kommunikationseinheit des Radarsensors ist dazu eingerichtet, den wenigstens einen Parameter durch das Gehäuse drahtlos zu übertragen und/oder ein mit dem wenigstens einen Parameter korrelierendes Messsignal und/oder ein für den wenigstens einen Parameter repräsentatives und/oder indikatives Messsignal durch das Gehäuse hindurch zu übermitteln. Dazu kann die Kommunikationseinheit insbesondere bekannte Kommunikationsstandards wie Bluetooth (beispielsweise Bluetooth Low Energy), ZigBee, Wi-Fi (beispielsweise Wi-Fi HaLow) oder zellulare Mobilfunkstandards wie 2G, 3G oder 4G (beispielsweise LTE Cat 0) verwenden. Die Kommunikationseinheit kann auch dazu eingerichtet sein, eine optische Kommunikationsverbindung bereitzustellen. Die Kommunikationseinheit kann daher beispielsweise ein Bluetooth-Modul, ein Infrarotmodul und/oder ein WLAN-Modul aufweisen.

Die Kommunikationseinheit kann dazu eingerichtet sein, einen Messwert und/oder das Messsignal zu festen Zeiten, insbesondere periodisch, zu senden. Die Kommunikationseinheit kann auch dazu eingerichtet sein, Nachrichten und/oder Steuersignale von anderen Geräten zu empfangen und zu verarbeiten. Beispielsweise kann die Kommunikationseinheit dazu eingerichtet sein, ein Steuersignal zu empfangen und zu verarbeiten, mit dem ein anderes Gerät einen Messwert für den Füllstand in dem Behälter anfragt. Die Kommunikationseinheit kann dazu eingerichtet sein, in Reaktion auf die Anfrage bzw. das Steuersignal des anderen Geräts die Sensoreinheit und/oder die elektronische Auswerteeinheit zu triggern, eine Messung des Füllstandes und/oder Grenzstandes in dem Behälter auszuführen. Ferner kann die Kommunikationseinheit dazu eingerichtet sein, als Antwort auf die Anfrage bzw. das Steuersignal des anderen Geräts den von der elektronischen Auswerteeinheit in Reaktion auf den Trigger bestimmten, Parameter, den Messwert und/oder das Messsignal zu senden.

Die Kommunikationseinheit kann ferner dazu eingerichtet sein, eine Nachricht bzw. ein Steuersignal eines anderen Geräts zu empfangen und zu verarbeiten, mit der das andere Gerät einen Messwert mitteilt, beispielsweise einen von dem anderen Gerät gemessenen Wert für den Füllstand in dem Behälter. Die Kommunikationseinheit kann dazu eingerichtet sein, den von der elektronischen Auswerteeinheit bestimmten Parameter unter Verwendung des von dem anderen Gerät empfangenen Messwerts zu korrigieren und/oder den korrigierten Parameter zu senden. Auch kann die Kommunikationseinheit dazu eingerichtet sein, Parametrierdaten zur Parametrierung des Radarsensors zu empfangen und/oder zu senden.

Anstelle von oder in Ergänzung zu der Kommunikationseinheit kann der Radarsensor eine Anzeigevorrichtung aufweisen, beispielsweise eine Flüssigkeitskristallanzeige, über die der Messwert für den Füllstand angezeigt werden kann.

Die Energieversorgungseinheit des Radarsensors ist dazu ausgeführt, die Sensoreinheit, die elektronische Auswerteeinheit und die Kommunikationseinheit zumindest teilweise mit elektrischer Energie zu versorgen. Die Energieversorgungseinheit kann dazu eine Batterie aufweisen, wobei die Batterie auswechselbar oder nicht auswechselbar sein kann.

Das Gehäuse des Radarsensors ist dazu ausgeführt, die Sensoreinheit, die elektronische Auswerteeinheit, die Energieversorgungseinheit und die Kommunikationseinheit vollständig zu umhüllen, zu umschließen und/oder zu kapseln. Insbesondere kann das Gehäuse keine Öffnungen für Kabeldurchführungen aufweisen. Das Gehäuse kann einen geschlossenen Innenraum aufweisen und/oder bilden, in dem die Sensoreinheit, die elektronische Auswerteeinheit, die Energieversorgungseinheit und die Kommunikationseinheit angeordnet und/oder aufgenommen sind. Durch das vollständig umhüllende Gehäuse können die Sensoreinheit, die elektronische Auswerteeinheit, die Energieversorgungseinheit und die Kommunikationseinheit vor Staub, Gasen und Flüssigkeiten in der Umgebung des Radarsensors zuverlässig geschützt werden. Dadurch kann ein sicherer und zuverlässiger Betrieb des Radarsensors ermöglicht werden. Insbesondere kann der Radarsensor innerhalb des Behälters betrieben werden, in dem der Füllstand gemessen werden soll. Alternativ dazu kann der Radarsensor eingepasst in eine Öffnung des Behälters, in dem sich das Füllgut befindet und/oder außerhalb des Behälters betrieben werden.

Das Gehäuse des Radarsensors ist ferner derart ausgebildet, dass das Radarsignal, das Sendesignal und/oder das Empfangssignal durch das Gehäuse hindurch, insbesondere durch eine Gehäusewandung hindurch transmittiert werden kann. Gleichsam kann das Gehäuse dazu eingerichtet, ausgeführt und/oder ausgebildet sein, die Messung des Füllstandes und/oder des Grenzstandes durch das Gehäuse hindurch zu ermöglichen. Das Gehäuse ist aus einem Kunststoff, beispielsweise aus Polyethylen (PE) und/oder High Density Polyethylen (HDPE), gefertigt, der für das von der Sensoreinheit abgestrahlte Radarsignal im Wesentlichen transparent ist. Es ist auch möglich, dass nur ein Abschnitt des Gehäuses für das von der Sensoreinheit abgestrahlte Radarsignal transparent ist, und die Sensoreinheit kann dazu ausgeführt sein, dass das Radarsignal durch den transparenten Abschnitt des Gehäuses hindurch propagiert. Auch kann vorgesehen sein, in zumindest einem Teilbereich des Gehäuses, durch welchen das Abstrahlen und Empfangen des Radarsignals erfolgt, eine Dicke der Gehäusewandung derart zu wählen, dass das Radarsignal nicht oder nur geringfügig von dem Gehäuse absorbiert wird. Eine Dicke und/oder Wandstärke der Gehäusewandung kann etwa in einem Bereich von 1 mm bis 5 mm liegen, um eine sinnvolle mechanische Stabilität zu gewährleisten. Ein Dicke der Gehäusewandung in dem Teilbereich kann geringer als eine Dicke eines weiteren Teilbereichs des Gehäuses sein.

Gemäß einer Ausführungsform umschließt das Gehäuse die Sensoreinheit, die elektronische Auswerteeinheit, die Energieversorgungseinheit und die Kommunikationseinheit hermetisch, insbesondere staubdicht, wasserdicht und/oder luftdicht. Beispielsweise kann das Gehäuse des Radarsensors zum Erreichen der Schutzart IP68 und/oder IP 69 ausgeführt sein, d.h. das Gehäuse des Radarsensors ist staubdicht und bietet Schutz gegen Eindringen von Wasser auch bei dauerndem Untertauchen. Darüber hinaus kann das Gehäuse dazu ausgeführt und/oder ausgebildet sein, das Eindringen von Gasen in das Innere des Gehäuses zu verhindern. Dies ist beispielsweise in Anlagen der chemischen Industrie relevant, in denen explosive oder korrodierende Gase auftreten können.

Gemäß einer Ausführungsform ist der Radarsensor nach außen, nach außen hin und/oder außenseitig vollständig kabellos ausgeführt. Alternativ oder zusätzlich weist das das Gehäuse keine Kabeldurchführung auf. Damit kann der Radarsensor zumindest temporär völlig autark und nicht kabelgebunden betrieben werden. Dies ermöglicht zudem eine effiziente und flexible Anbringung des Radarsensors an einem beliebigen Behälter. Auch kann hierdurch ein Installationsaufwand zur Installation des Radarsensors erheblich verringert sein.

Gemäß einer weiteren Ausführungsform ist das Gehäuse des Radarsensors derart ausgeführt, dass es die Sensoreinheit, die elektronische Auswerteeinheit, die Energieversorgungseinheit und die Kommunikationseinheit permanent umschließt. In anderen Worten kann das Gehäuse des Radarsensors derart ausgestaltet sein, dass es nicht geöffnet werden kann. Dadurch wird insbesondere vermieden, dass durch ein ungewolltes Öffnen des Gehäuses aggressive Gase oder Flüssigkeiten mit der Sensoreinheit, der elektronischen Auswerteeinheit, der Energieversorgungseinheit oder der Kommunikationseinheit in Kontakt treten. Das permanent die Sensoreinheit, die elektronische Auswerteeinheit, die Energieversorgungseinheit und die Kommunikationseinheit umhüllende Gehäuse erhöht daher die Sicherheit und Robustheit des Radarsensors.

Beispielsweise kann das Gehäuse des Radarsensors dazu ausgeführt sein, eine Bündelung des von der Sensoreinheit abgestrahlten Radarsignals zu bewirken und/oder das Radarsignal zu bündeln. Insbesondere können das Material und/oder die Form des Gehäuses ausgeführt sein, um eine gewünschte Richtcharakteristik des Radarsensors zu erzielen. Beispielsweise kann das Gehäuse des Radarsensors dazu ausgeführt sein, dass die Hauptkeule der Richtcharakteristik schmaler ist als ein vorgegebener Winkel. Ferner kann das Gehäuse des Radarsensors dazu ausgeführt sein, dass die Nebenkeulen um einen vorgegebenen Faktor schwächer sind als die Hauptkeule. Alternativ oder zusätzlich kann das Gehäuse dazu ausgeführt sein, dass der Anteil der über die Hauptkeule abgestrahlten Energie maximal ist. Eine starke Bündelung des abgestrahlten Radarsignals kann ermöglichen, den Füllstand und/oder Grenzstand auch bei geringen Sendeleistungen des Radarsignals zuverlässig zu bestimmen und/oder zu ermitteln. Mit einer stärkeren Bündelung des abgestrahlten Radarsignals kann daher eine Reduktion des Energieverbrauchs erzielt werden. Dadurch kann eine Verlängerung der Lebensdauer und/oder eine Betriebsdauer des Radarsensors erreicht werden.

Gemäß einer weiteren Ausführungsform weist die Energieversorgungseinheit einen Akkumulator auf. Optional kann die Energieversorgungseinheit eine Ladeeinheit zum Aufladen des Akkumulators aufweisen. Der Akkumulator kann verwendet werden, um die Sensoreinheit, die elektronische Auswerteeinheit und die Kommunikationseinheit mit elektrischer Energie zu versorgen. Durch das Wiederaufladen des Akkumulators durch die Ladeeinheit kann die Betriebsdauer des Radarsensors verlängert werden.

Die Energieversorgungseinheit kann auch eine Vorrichtung zur Ermittlung des Ladezustands des Akkumulators aufweisen. Der Radarsensor kann dazu eingerichtet sein, die Messung des Füllstandes und/oder Grenzstandes in dem Behälter nach bestimmten Zeitabständen zu wiederholen, wobei der Zeitabstand von dem Ladezustand des Akkumulators abhängt. Insbesondere kann die Sensoreinheit dazu eingerichtet sein, das Radarsignal weniger häufig abzustrahlen, wenn der Ladezustand des Akkumulators niedrig ist. Dementsprechend kann die elektronische Auswerteeinheit dazu eingerichtet sein, den mit dem Füllstand und/oder dem Grenzstand korrelierenden Parameter weniger häufig zu bestimmen, wenn der Ladezustand des Akkumulators niedrig ist und/oder eine definierbare oder vorbestimmte Schwelle des erreicht. Außerdem kann die Kommunikationseinheit dazu ausgeführt sein, den Parameter und/oder das Messsignal weniger häufig zu senden, wenn der Ladezustand des Akkumulators niedrig ist und/oder eine definierbare oder vorbestimmte Schwelle des erreicht.

Gemäß einer weiteren Ausführungsform weist die Ladeeinheit der Energieversorgungseinheit eine Solarzelle auf und/oder das Gehäuse des Radarsensors ist lichtdurchlässig ausgebildet. Dazu kann zumindest ein Teil des Gehäuses beispielsweise aus einem lichtdurchlässigen Kunststoff wie Polyethylen oder Polypropylen gefertigt sein. Dadurch kann die Betriebsdauer des Radarsensors in vorteilhafter Weise erhöht werden und/oder der Radarsensor kann über einen langen Zeitraum autark betrieben werden.

Gemäß einer weiteren Ausführungsform weist die Ladeeinheit der Energieversorgungseinheit einen Generator zur Gewinnung elektrischer Energie aus Vibrationen aufweist. Dadurch kann die Betriebsdauer des Radarsensors in vorteilhafter Weise erhöht werden und/oder der Radarsensor kann über einen langen Zeitraum autark betrieben werden.

Gemäß einer weiteren Ausführungsform weist die Ladeeinheit der Energieversorgungseinheit einen Empfänger für eine drahtlose Energieübertragung mittels elektromagnetischer Induktion auf. Beispielsweise kann der Empfänger für die drahtlose Energieübertragung mit dem Qi-Standard kompatibel sein. Dies ermöglicht eine effiziente und sichere Aufladung der Energieversorgungseinheit, ohne dass ein Kabel zur Energieübertragung notwendig wäre.

Gemäß einer weiteren Ausführungsform weist die Ladeeinheit der Energieversorgungseinheit einen thermoelektrischen Generator zur Gewinnung elektrischer Energie aus räumlichen Temperaturunterschieden auf. Auch dies kann die Betriebsdauer des Radarsensors in vorteilhafter Weise erhöhen.

Das Gehäuse des Radarsensors ist einstückig aus Kunststoff gespritzt. Ein aus Kunststoff gespritztes Gehäuse kann besonders vorteilhaft sein, da es keine Verbindungsstellen aufweist, an denen verschiedene Gehäusebauteile miteinander verbunden sind und an denen Undichtigkeiten auftreten könnten, insbesondere wenn das Gehäuse einstückig ausgestaltet ist. Ein Umspritzen der Sensoreinheit, der elektronischen Auswerteeinheit, der Energieversorgungseinheit und der Kommunikationseinheit zur Ausbildung eines einstückigen Gehäuses führt daher zu besonders sicheren und robusten Radarsensoren.

Gemäß einer weiteren Ausführungsform ist das Gehäuse des Radarsensors vollständig aus einem thermoplastischen Kunststoff gefertigt. Dies ermöglicht eine kostengünstige Herstellung mittels Spritzguss. Insbesondere ist es vorteilhaft, wenn das Gehäuse aus einem Kunststoff mit geringer relativer Permittivität (etwa 1.5-3 und/oder 2-3) wie zum Beispiel Polyethylen oder Polypropylen gefertigt ist. Da die Messung des Radarsensors durch das Gehäuse hindurch erfolgt, reduziert dies das Klingeln der Antenne, verbessert die empfangene Signalqualität im Nahbereich und verringert somit die Blockdistanz des Sensors. Unter der Blockdistanz versteht man die Distanz innerhalb der keine bzw. keine verlässliche Messung/Auswertung der empfangenen Signale möglich ist.

Ein zweiter Aspekt der Erfindung betrifft ein Verfahren zur Herstellung eines Radarsensors, so wie voranstehend und nachfolgend beschrieben. In einem ersten Schritt wird eine Sensoreinheit, eine elektronische Auswerteeinheit, eine Kommunikationseinheit und eine Energieversorgungseinheit bereitgestellt. In einem weiteren Schritt wird die Sensoreinheit, die elektronischen Auswerteeinheit, die Kommunikationseinheit und die Energieversorgungseinheit des Radarsensors mit einem Kunststoff unter Ausbildung eines Gehäuses in einstückiger Form vollständig umspritzt, wobei das Gehäuse die Sensoreinheit, die elektronische Auswerteeinheit, die Energieversorgungseinheit und die Kommunikationseinheit vollständig umschließt. Ein einstückiges Gehäuse ist besonders vorteilhaft, da es keine Verbindungsstellen von Gehäusebauteilen aufweist, an denen Undichtigkeiten auftreten können. Ein Umspritzen der Sensoreinheit, der elektronischen Auswerteeinheit, der Energieversorgungseinheit und der Kommunikationseinheit zur Ausbildung eines einstückigen Gehäuses führt daher zu besonders sicheren und robusten Radarsensoren.

Merkmale, Elemente und/oder Funktionen des Radarsensors, so wie voranstehend und nachfolgend beschreiben, können Merkmale, Elemente und/oder Schritte des Verfahrens zur Herstellung des Radarsensors, so wie voranstehend und nachfolgend beschrieben, sein und umgekehrt.

Im Folgenden werden Ausführungsbeispiele der Erfindung unter Bezugnahme auf die Figuren beschrieben.

### Kurze Beschreibung der Figuren

Fig. 1 zeigt schematisch einen Radarsensor zur Messung des Füllstands eines Füllgutes in einem Behälter gemäß dem Stand der Technik.
Fig. 2 zeigt schematisch einen erfindungsgemäßen Radarsensor zur Messung des Füllstands eines Füllgutes in einem Behälter.
Fig. 3 zeigt ein Flussdiagramm zur Illustration von Schritten eines Verfahrens zum Herstellen eines Radarsensors gemäß einem Ausführungsbeispiel der Erfindung.

Ähnliche, ähnlich wirkende, gleiche oder gleich wirkende Elemente in den Figuren werden mit ähnlichen oder gleichen Bezugszeichen versehen. Die Figuren sind lediglich schematische und nicht maßstabsgetreu.

### Detaillierte Beschreibung von Ausführungsbeispielen

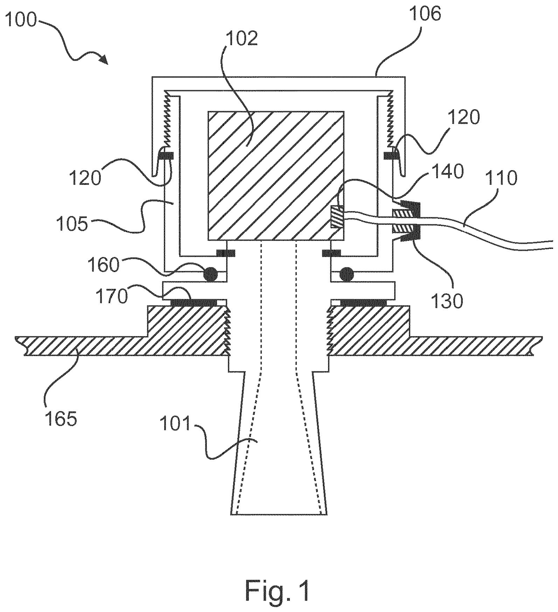

Figur 1 zeigt schematisch einen Radarsensor 100 zur Messung des Füllstands eines Füllgutes in einem Behälter gemäß dem Stand der Technik. Der Radarsensor 100 weist eine Antenne 101, eine Elektronik- und Auswerteeinheit 102, ein Gehäuse 105, sowie einen Deckel 106 auf. Das Gehäuse 105 weist eine abgedichtete Kabeldurchführung 130 auf, durch die ein Kabel 110 geführt werden kann, um den Radarsensor 100 mit elektrischer Energie zu versorgen und oder eine Kommunikationsverbindung bereit zu stellen. Der Deckel 106, beispielsweise ein Schraubdeckel, kann entfernt werden, um das Kabel 110 an dem Anschluss 140 anzuschließen. Um die Elektronik- und Auswerteeinheit 102 des Radarsensors 100 vor Gasen und oder Flüssigkeiten zu schützen, muss das Gehäuse 105 abgedichtet werden. Dazu ist eine Dichtung 120 für den Deckel 106 vorgesehen. Darüber hinaus ist eine Dichtung an der Kabeldurchführung 130 erforderlich. Da die Antenne 101 und das Gehäuse 105 meist aus unterschiedlichen Materialen bestehen, ist eine weitere Dichtung 160 nötig. Zur Abdichtung zwischen Behälterflansch 165 und Antenne wird eine weitere Dichtung 170 benötigt. Bei Radarsensoren zur Füllstandmessung sind daher mehrere Dichtungen erforderlich, um die Elektronik- und Sensoreinheit gegenüber Umwelteinflüssen zu schützen und/oder eine Öffnung des Behälters für den Radarsensor abzudichten.

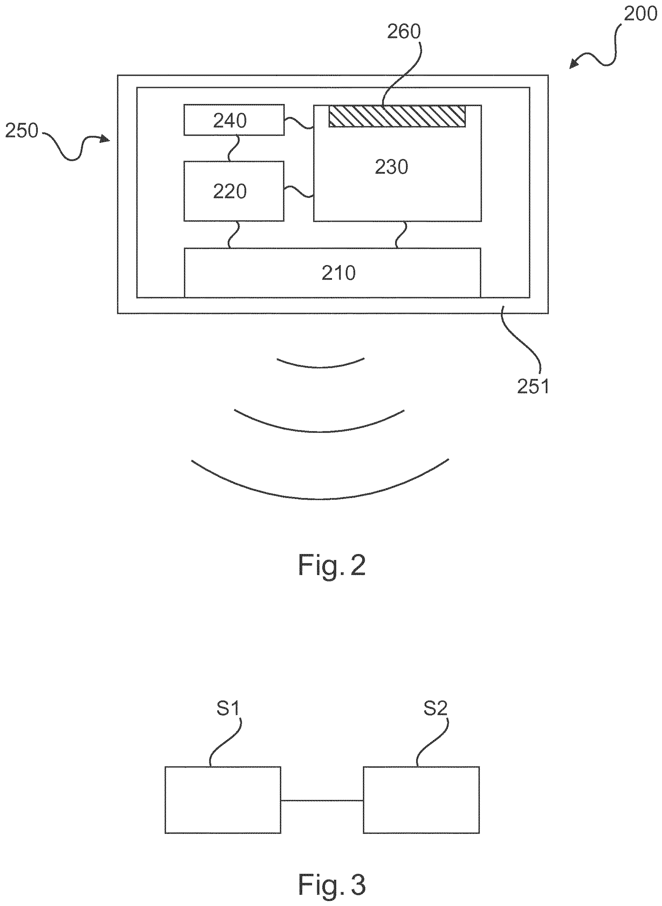

Figur 2 zeigt schematisch einen erfindungsgemäßen Radarsensor 200 für die Füllstandmessung und/oder Grenzstandmessung. Der Radarsensor 200 weist eine Sensoreinheit 210, eine elektronische Auswerteeinheit 220, eine Kommunikationseinheit 240, eine Energieversorgungseinheit 230 und ein Gehäuse 250 auf.

Die Sensoreinheit 210 weist eine Antenne, welche schematisch in Figur 2 mit der Sensoreinheit 210 illustriert ist, auf, über die ein Radarsignal durch das Gehäuse 250, eine Gehäusewandung 251 und/oder eine Gehäusewand 251 abgestrahlt und/oder empfangen wird. Das Radarsignal propagiert zur Oberfläche des Füllgutes in dem Behälter, wird dort teilweise reflektiert und propagiert zurück zu der Antenne der Sensoreinheit 210. Die Sensoreinheit 210 stellt der elektronischen Auswerteeinheit 220 Signale und/oder Daten bereit, aus denen die elektronische Auswerteeinheit basierend auf der Laufzeit zwischen Abstrahlen und Empfangen des Radarsignals wenigstens einen mit dem Füllstand und/oder dem Grenzstand korrelierenden Parameter bestimmt.

Der von der elektronischen Auswerteeinheit 220 bestimmte wenigstens eine Parameter und/oder ein damit korrelierender Messwert wird über eine Kommunikationseinheit 240 einem Benutzer zur Verfügung gestellt. Die Kommunikationseinheit 240 ist dazu ausgeführt, eine Übertragung des von der elektronischen Auswerteeinheit 220 bestimmten Parameters und/oder des Messwertes, beispielsweise mittels Funk, Bluetooth, WLAN, Infrarot und/oder optischer Signale, zu ermöglichen.

Darüber hinaus kann der Radarsensor auch eine nicht dargestellte Anzeigevorrichtung aufweisen, beispielsweise eine Flüssigkeitskristallanzeige. Über die Anzeigevorrichtung kann von der elektronischen Auswerteeinheit bestimmte Füllstandhöhe des Füllgutes in dem Behälter angezeigt werden.

Die Energieversorgungseinheit 230 ist dazu ausgeführt, die Sensoreinheit 210, die elektronische Auswerteeinheit 220 und die Kommunikationseinheit 240 mit elektrischer Energie zu versorgen.

Das Gehäuse 250 umhüllt und/oder umschließt die Sensoreinheit 210, die elektronische Auswerteeinheit 220, die Energieversorgungseinheit 230 und die Kommunikationseinheit 240 vollständig. Insbesondere kann das Gehäuse 250 dazu ausgeführt sein, dass Staub, Flüssigkeiten oder Gase nicht in das Gehäuse eindringen können, wodurch der Radarsensor robust und sicher insbesondere gegenüber aggressiven oder explosiven Medien wird. Die Messung des Füllstandes und/oder Grenzstandes erfolgt durch das vollständig umhüllende Gehäuse 250 hindurch.

Aufgrund der nur endlichen Kapazität der Energieversorgungseinheit 230 steht dem Radarsensor 200 nur eine begrenzte Energiemenge ab Werk zur Verfügung. Um die Lebensdauer des Radarsensors 200 zu verlängern, kann die Energieversorgungseinheit einen Akkumulator und/oder eine Ladeeinheit 260 aufweisen, wobei die Ladeeinheit zum Aufladen des Akkumulators ausgeführt ist. Beispielsweise kann die Ladeeinheit einen Empfänger für drahtlose Energieübertragungen mittels elektromagnetischer Induktion beispielsweise unter Verwendung des Qi-Standards aufweisen. Alternativ oder in Ergänzung dazu kann die Ladeeinheit eine Solarzelle und/oder einen Generator zur Gewinnung elektrischer Energie aus Vibrationen aufweisen. Darüber hinaus kann die Ladeeinheit einen thermoelektrischen Generator zur Gewinnung elektrischer Energie aus räumlichen Temperaturunterschieden aufweisen.

Figur 3 zeigt ein Flussdiagramm zur Illustration von Schritten eines Verfahrens zum Herstellen eines Radarsensors 200 gemäß einem Ausführungsbeispiel der Erfindung. Der Radarsensor 200 kann etwa der mit Bezug auf Figur 2 beschrieben Radarsensor 200 sein.

In einem ersten Schritt S1 wird eine Sensoreinheit 210, eine elektronische Auswerteeinheit 220, eine Kommunikationseinheit 240 und eine Energieversorgungseinheit 230 bereitgestellt. In einem weiteren Schritt S2 wird die Sensoreinheit 210, die elektronischen Auswerteeinheit 220, die Kommunikationseinheit 240 und die Energieversorgungseinheit 230 des Radarsensors mit einem Kunststoff unter Ausbildung eines Gehäuses 250 in einstückiger Form vollständig umspritzt, so dass das Gehäuse 250 die Sensoreinheit, die elektronische Auswerteeinheit, die Energieversorgungseinheit und die Kommunikationseinheit vollständig umschließt

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radarsensor (200) zur Messung eines Füllstandes und/oder Grenzstandes eines Füllgutes in einem Behälter, der Radarsensor aufweisend:
eine Sensoreinheit (210), eine elektronische Auswerteeinheit (220), eine Kommunikationseinheit (240), eine Energieversorgungseinheit (230) und ein Gehäuse (250);
wobei die Sensoreinheit dazu ausgeführt ist, ein Radarsignal durch das Gehäuse hindurch, insbesondere durch eine Gehäusewandung hindurch, abzustrahlen und/oder zu empfangen;
wobei das Gehäuse derart ausgebildet ist, dass das Radarsignal durch das Gehäuse, insbesondere durch die Gehäusewandung, transmittierbar ist;
wobei die elektronische Auswerteeinheit dazu eingerichtet ist, basierend auf einer Laufzeit des Radarsignals zwischen Abstrahlen und Empfangen des Radarsignals wenigstens einen mit dem Füllstand und/oder dem Grenzstand korrelierenden Parameter zu ermitteln;
wobei die Kommunikationseinheit dazu eingerichtet ist, den wenigstens einen Parameter drahtlos durch das Gehäuse hindurch an einen Empfänger zu übermitteln;
wobei das Gehäuse (250) die Sensoreinheit, die elektronische Auswerteeinheit, die Energieversorgungseinheit und die Kommunikationseinheit vollständig umschließt;
wobei das Gehäuse vollständig geschlossen ist; und
wobei das Gehäuse (250) einstückig aus Kunststoff gespritzt ist.

2. Radarsensor (200) nach Anspruch 1,
wobei das Gehäuse (250) die Sensoreinheit, die elektronische Auswerteeinheit, die Energieversorgungseinheit und die Kommunikationseinheit hermetisch, insbesondere staubdicht, wasserdicht und/oder luftdicht, umschließt.

3. Radarsensor (200) nach einem der voranstehenden Ansprüche,
wobei der Radarsensor nach außen vollständig kabellos ausgeführt ist; und/oder
wobei das Gehäuse keine Kabeldurchführung aufweist.

4. Radarsensor (200) nach einem der voranstehenden Ansprüche,
wobei das Gehäuse (250) die Sensoreinheit (210), die elektronische Auswerteeinheit (220), die Energieversorgungseinheit (230) und die Kommunikationseinheit (240) permanent umschließt.

5. Radarsensor (200) nach einem der vorhergehenden Ansprüche,
wobei die Energieversorgungseinheit (230) einen Akkumulator aufweist; und/oder
wobei die Energieversorgungseinheit eine Ladeeinheit (260) zum Aufladen eines Akkumulators aufweist.

6. Radarsensor (200) nach Anspruch 5,
wobei die Ladeeinheit (260) eine Solarzelle aufweist; und/oder wobei das Gehäuse (250) lichtdurchlässig ist.

7. Radarsensor (200) nach einem der Ansprüche 5 oder 6,
wobei die Ladeeinheit (260) einen Generator zur Gewinnung elektrischer Energie aus Vibrationen aufweist.

8. Radarsensor (200) nach einem der Ansprüche 5 bis 7,
wobei die Ladeeinheit (260) einen Empfänger für eine drahtlose Energieübertragung mittels elektromagnetischer Induktion aufweist.

9. Radarsensor (200) nach einem der Ansprüche 5 bis 8,
wobei die Ladeeinheit (260) einen thermoelektrischen Generator zur Gewinnung elektrischer Energie aus räumlichen Temperaturunterschieden aufweist.

10. Radarsensor (200) nach einem der vorhergehenden Ansprüche, wobei das Gehäuse (250) vollständig aus einem thermoplastischen Kunststoff gefertigt ist.

11. Radarsensor (200) nach einem der voranstehenden Ansprüche,
wobei ein Material des Gehäuses (250) eine relative Permittivität zwischen 1,5 und 3, insbesondere zwischen 2 und 3, aufweist.

12. Verfahren zur Herstellung eines Radarsensors (200) nach einem der Ansprüche 1 bis 11, si das Verfahren aufweisend:
Bereitstellen einer Sensoreinheit (210), einer elektronischen Auswerteeinheit (220), einer Kommunikationseinheit (240) und einer Energieversorgungseinheit (230); und vollständiges Umspritzen der Sensoreinheit (210), der elektronischen Auswerteeinheit (220), der Kommunikationseinheit (240) und der Energieversorgungseinheit (230) des Radarsensors mit einem Kunststoff unter Ausbildung eines Gehäuses (250) in einstückiger Form, so dass das Gehäuse die Sensoreinheit, die elektronische Auswerteeinheit, die Energieversorgungseinheit und die Kommunikationseinheit vollständig umschließt.

## Claims

1. A radar sensor (200) for measuring a filling level and/or limit level of a filling material in a container, the radar sensor having:
a sensor unit (210), an electronic evaluation unit (220), a communication unit (240), a power supply unit (230) and a housing (250);
wherein the sensor unit is configured to emit and/or receive a radar signal through the housing, in particular through a housing wall;
wherein the housing is configured such that the radar signal can be transmitted through the housing, in particular through the housing wall;
wherein the electronic evaluation unit is configured to determine at least one parameter correlating with the filling level and/or the limit level based on a runtime of the radar signal between emission and reception of the radar signal;
wherein the communication unit is configured to wirelessly transmit the at least one parameter through the housing to a receiver;
wherein the housing (250) encloses completely the sensor unit, the electronic evaluation unit, the power supply unit and the communication unit;
wherein the housing is completely closed; and
wherein the housing (250) is integrally moulded from plastic.

2. The radar sensor (200) according to claim 1,
wherein the housing (250) encloses the sensor unit, the electronic evaluation unit, the power supply unit and the communication unit hermetically, in particular dust-tight, watertight and/or airtight.

3. The radar sensor (200) according to any one of the preceding claims,
wherein the radar sensor is configured completely wireless to an exterior; and/or wherein the housing does not have a cable bushing.

4. The radar sensor (200) according to one of the preceding claims,
wherein the housing (250) permanently encloses the sensor unit (210), the electronic evaluation unit (220), the power supply unit (230) and the communication unit (240).

5. The radar sensor (200) according to any one of the preceding claims,
wherein the power supply unit (230) comprises an accumulator; and/or
wherein the power supply unit comprises a charging unit (260) for charging an accumulator.

6. The radar sensor (200) of claim 5,
wherein the charging unit (260) comprises a solar cell; and/or
wherein the housing (250) is translucent.

7. The radar sensor (200) according to any one of claims 5 or 6, wherein the charging unit (260) comprises a generator for generating electrical energy from vibrations.

8. The radar sensor (200) according to any one of claims 5 to 7, wherein the charging unit (260) comprises a receiver for wireless power transmission of energy by means of electromagnetic induction.

9. The radar sensor (200) according to any one of claims 5 to 8, wherein the charging unit (260) comprises a thermoelectric generator for generating electrical energy from spatial temperature differences.

10. The radar sensor (200) according to any one of the preceding claims, wherein the housing (250) is made completely of a thermoplastic material.

11. The radar sensor (200) according to any one of the preceding claims, wherein a material of the housing (250) has a relative permittivity between 1.5 and 3, in particular between 2 and 3.

12. A method for manufacturing a radar sensor (200) according to any one of claims 1 to 11, the method comprising:
providing a sensor unit (210), an electronic evaluation unit (220), a communication unit (240) and a power supply unit (230); and
complete overmoulding of the sensor unit (210), the electronic evaluation unit (220), the communication unit (240) and the power supply unit (230) of the radar sensor with a plastic, thereby forming a housing (250) in single piece form, such that the housing encloses completely the sensor unit, the electronic evaluation unit, the power supply unit and the communication unit of the radar sensor.

## Revendications

1. Capteur radar (200) destiné à la mesure d'un niveau de remplissage et/ou d'un niveau limite d'un produit de remplissage dans un récipient, le capteur radar présentant :
une unité de détection (210), une unité d'évaluation électronique (220), une unité de communication (240), une unité d'alimentation en énergie (230) et un boîtier (250) ;
dans lequel l'unité de détection est conçue pour émettre et/ou recevoir un signal radar à travers le boîtier, en particulier à travers une paroi de boîtier ;
dans lequel le boîtier est conçu de telle sorte que le signal radar peut être transmis à travers le boîtier, en particulier à travers la paroi de boîtier ;
dans lequel l'unité d'évaluation électronique est configurée pour déterminer au moins un paramètre corrélé au niveau de remplissage et/ou au niveau limite sur la base d'un temps de transit du signal radar entre l'émission et la réception du signal radar ;
dans lequel l'unité de communication est configurée pour transmettre sans fil ledit au moins un paramètre à un récepteur à travers le boîtier ;
dans lequel le boîtier (250) renferme complètement l'unité de détection, l'unité d'évaluation électronique, l'unité d'alimentation en énergie et l'unité de communication ;
dans lequel le boîtier est complètement fermé ; et
dans lequel le boîtier (250) est moulé d'une seule pièce en matière plastique.

2. Capteur radar (200) selon la revendication 1,
dans lequel le boîtier (250) renferme l'unité de détection, l'unité d'évaluation électronique, l'unité d'alimentation en énergie et l'unité de communication hermétiquement, en particulier de manière étanche à la poussière, à l'eau et/ou à l'air.

3. Capteur radar (200) selon l'une des revendications précédentes,
dans lequel le capteur radar est réalisé complètement sans fil vers l'extérieur ; et/ou
dans lequel le boîtier ne présente pas de passage de câble.

4. Capteur radar (200) selon l'une des revendications précédentes,
dans lequel le boîtier (250) renferme de façon permanente l'unité de détection (210), l'unité d'évaluation électronique (220), l'unité d'alimentation en énergie (230) et l'unité de communication (240).

5. Capteur radar (200) selon l'une des revendications précédentes,
dans lequel l'unité d'alimentation en énergie (230) présente un accumulateur ; et/ou
dans lequel l'unité d'alimentation en énergie présente une unité de charge (260) pour charger un accumulateur.

6. Capteur radar (200) selon la revendication 5,
dans lequel l'unité de charge (260) présente une cellule solaire ; et/ou
dans lequel le boîtier (250) est translucide.

7. Capteur radar (200) selon l'une des revendications 5 ou 6, dans lequel l'unité de charge (260) présente un générateur pour générer de l'énergie électrique à partir de vibrations.

8. Capteur radar (200) selon l'une des revendications 5 à 7,
dans lequel l'unité de charge (260) présente un récepteur pour une transmission d'énergie sans fil par induction électromagnétique.

9. Capteur radar (200) selon l'une des revendications 5 à 8,
dans lequel l'unité de charge (260) présente un générateur thermoélectrique pour générer de l'énergie électrique à partir de différences de température ambiantes.

10. Capteur radar (200) selon l'une des revendications précédentes,
dans lequel le boîtier (250) est complètement constitué d'une matière plastique thermoplastique.

11. Capteur radar (200) selon l'une des revendications précédentes,
dans lequel un matériau du boîtier (250) présente une permittivité relative comprise entre 1,5 et 3, en particulier entre 2 et 3.

12. Procédé de fabrication d'un capteur radar (200) selon l'une des revendications 1 à 11, le procédé présentant les étapes consistant à :
fournir une unité de détection (210), une unité d'évaluation électronique (220), une unité de communication (240) et une unité d'alimentation en énergie (230) ; et
surmouler intégralement l'unité de détection (210), l'unité d'évaluation électronique (220), l'unité de communication (240) et l'unité d'alimentation en énergie (230) du capteur radar avec une matière plastique pour former un boîtier (250) d'une seule pièce, de telle sorte que le boîtier renferme complètement l'unité de détection, l'unité d'évaluation électronique, l'unité d'alimentation en énergie et l'unité de communication.
